(19) Europäisches Patentamt
European Patent Office
Office européen des brevets

(11) **EP 2 466 708 A1**

(12) **EUROPEAN PATENT APPLICATION**

(43) Date of publication:
**20.06.2012 Bulletin 2012/25**

(51) Int Cl.:
***H02G 15/072*** (2006.01)

(21) Application number: **10195572.2**

(22) Date of filing: **17.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **3M Innovative Properties Company Saint Paul, MN 55133-3427 (US)**

(72) Inventors:
• **Gravermann, Mark**
  **41812, Erkelenz (DE)**
• **Weichold, Jens**
  **41812, Erkelenz (DE)**

(74) Representative: **Bergen, Katja**
   **3M Deutschland GmbH**
   **OIPC**
   **Carl-Schurz-Strasse 1**
   **41453 Neuss (DE)**

(54) **Stress control device**

(57)    Electrical stress control device for use with an end portion of a cable 1 having a central conductor 5 and a ground layer 15, the stress control device comprising an axial bore 170 into which the end portion of the cable 1 can be inserted, and two or more conductive or semi-conductive stress control layers 110, 120, 130, at least parts of which are arranged concentrically around the bore 170 and concentrically with each other, characterized in that the end portion of the cable 1 can be inserted into the bore 170 in an axial direction 25 in such a way that the stress control layers 110, 120, 130 of the stress control device extend, in said axial direction 25, further towards the end 3 of the cable 1 than the ground layer 15 of the cable 1, as viewed in an axial longitudinal section, and in that a radially outer one of the stress control layers 110, 120, 130 extends, in said axial direction 25, further towards the end 3 of the cable 1 than a radially inner one of the stress control layers 110, 120, 130.

*FIG. 4*

## Description

The invention relates to a device for controlling electrical stress, specifically for controlling electrical stress in terminations or joints of high-voltage cables. It also relates to terminations or joints comprising such a device, and to methods of installing such terminations or joints.

High-voltage cables normally comprise a ground layer covering the cable insulation around the central conductor. The ground layer is often semiconductive or conductive, and is electrically connected to ground potential at some distance from the terminated cable end. Where a cable is to be terminated or joined with another cable, the insulation is normally cut back to expose the central conductor, and the ground layer is cut back further so that its edge is located at a distance from the end of the insulation. The electrical field lines between the central conductor and the ground layer concentrates at the edge of the ground layer close to the terminated cable end. On the one hand, a greater distance between the exposed part of the central conductor and the edge of ground layer reduces the risk of electrical breakdown in the strong electrical field between the central conductor and the edge of the ground layer. On the other hand, that distance should be kept to a minimum in order to keep the size of a termination or joint small so that their cost is lower and their installation is easier.

A termination or joint of a high-voltage cable must manage the strong electrical field between the central conductor and the edge of the ground layer at the end portion of the cable in order to avoid electrical "stress", i.e. negative effects caused by partial discharges, which may result in long-term electrical breakdown or electrical erosion, and interface discharges. These discharges are caused by the strong electrical field on the materials of the cable and those of the termination or joint. In particular, it is desirable to avoid an extreme concentration of the electrical field lines at the edge of the ground layer, while keeping the physical size of the entire termination or joint within reasonable limits.

Different field control or stress control approaches have been taken to avoid concentration of the electrical field, like resistive stress control, refractive stress control, capacitive stress control or geometric stress control. Traditionally, many cable termination devices or joint devices had stress cones, which provided a conductive ground layer on the outer surface of a cone-shaped element. The international patent application WO 00/74191 mentions geometrical field control comprising a stress cone.

In the European patent application EP 1056162, a device for controlling stress caused by an electric field is described that is characterized by a combination of capacitive field control, comprising a plurality of capacitive layers arranged substantially concentrically between an inner central conductor and an outer ground potential, and geometrical field control comprising a stress cone arranged in contact with the ground potential.

It is desirable to improve the stress control properties of cable terminations and joints in order to reduce the risk of electrical breakdown and damage to the cables or to the terminations or joints. In particular, it is desirable to provide stress control means that provide reliable stress control at higher voltages, without requiring more space. The present invention addresses these needs.

The present invention provides, in a first aspect, an electrical stress control device for use with an end portion of a cable having a central conductor and a ground layer. The stress control device comprises an axial bore into which the end portion of the cable can be inserted, and two or more conductive or semiconductive stress control layers, at least parts of which are arranged concentrically around the bore and concentrically with each other. The end portion of the cable can be inserted into the bore in an axial direction in such a way that at least two of the stress control layers of the stress control device extend, in said axial direction, further towards the end of the cable than the ground layer of the cable, as viewed in an axial longitudinal section of the cable and the stress control device, and a radially outer one of the stress control layers extends, in said axial direction, further towards the end of the cable than a radially inner one of the stress control layers.

An electrical stress control device according to the invention may provide improved stress control at higher voltages without requiring more space than traditional stress control devices, because the edges of its stress control layers lie, in an axial longitudinal section, on a profile that reduces the concentration of electrical field lines at an edge of the ground layer of a cable with which the stress control device can be used. The reduced concentration of electrical field lines results in a reduced risk of electrical breakdown at the edge of the ground layer of the cable. While some traditional stress control devices try to reduce the concentration of electrical field lines through elements that extend further in a radial direction of the cable, like, for example, stress cones, an electrical stress control device according to the invention uses stress control layers that may be thin and may not considerably extend in a radial direction. The use of such layers may thus allow a stress control device to have a diameter that is not considerably larger than the diameter of traditional stress control devices, while reducing concentration of field lines more effectively.

An electrical stress control device according to the invention comprises an axial bore, into which the end of a cable can be inserted. The diameter of the bore may be chosen such that it is large enough to allow insertion of the end portion of the cable, and such that it allows a tight fit between stress control device and the end portion of the cable, so that the stress control device is in a well-defined radial position relative to the cable. However, the bore may have a larger diameter than the end portion of the cable, and spacing means may be used, e.g. slipped over the cable, to allow the stress control device to be in a well-defined radial position relative to the cable. The bore may have a cylindrical shape, and it may extend from one end of the stress control device to another end of the stress control device.

In a stress control device according to the present invention, at least some parts of stress control layers are arranged concentrically around the bore and concentrically with each other. One stress control layer may, for example, extend further in a longitudinal direction away from the cable end than another stress control layer, so that only a part of that one stress control layers is arranged concentrically with another one of the stress control layers. A stress control layer may have, for example, openings or slits or protrusions, so that only those parts of the stress control layer are arranged concentrically around the bore and concentrically with each other that do not comprise those openings or slits or protrusions. A stress control layer may be a conductive or semiconductive tube or a conductive or semiconductive painted layer or a conductive or semiconductive extruded or a conductive or semiconductive co-extruded layer. A stress control layer may, for example, comprise an elastomer like, for example silicone, natural rubber or ethylene propylene diene monomer. A stress control layer may comprise particulate carbon matter to provide electrical conductivity.

An end portion of a cable may be inserted into the bore of an electrical stress control device according to the invention in such a way, that in one specific axial longitudinal section of the cable and the stress control device, at least two of the stress control layers of the stress control device extend further towards the end of the cable than the ground layer of the cable and a radially outer one of the stress control layers extends, in said axial direction, further towards the end of the cable than a radially inner one of the stress control layers. In the same inventive arrangement, but in another axial longitudinal section taken at a different angular position around the axis formed by the center line of the central conductor, one or both of these conditions may not be met. For example, not at least two of the stress control layers of the stress control device extend further towards the end of the cable than the ground layer of the cable or, as another example, no radially outer one of the stress control layers extends, in said axial direction, further towards the end of the cable than a radially inner one of the stress control layers.

In a further aspect of the invention, the cable can be inserted into the bore in an axial direction in such a way that the ground layer of the cable and at least two of the stress control layers of the stress control device have respective edges lying, in an axial longitudinal section, on a convex profile. Convex profiles of capacitor plates are known to reduce the concentration of electrical field lines at the edges of those plates, thereby reducing the risk of electrical breakdown between their edges. Applying the same principle to the location, in axial longitudinal section, of edges of the ground layer of the cable and stress control layers, i.e. the edges of the ground layer and of the stress control layers forming a discrete convex profile, also reduces the concentration of electrical field lines at the edge of the ground layer and thereby provides reduced risk of electrical breakdown between the central conductor and the ground layer of a cable with which the stress control device may be used. A convex profile is typically a profile that gradually bends away, in an axial longitudinal section, from the central conductor of the cable with gradually decreasing distance from the end of the cable. A convex profile may be a line, in an axial longitudinal section of the cable and the stress control device, that comprises straight sections. It may or may not comprise curved sections. The curvature radius of the convex profile may vary along the profile.

In a further aspect of the invention, the cable can be inserted into the bore in an axial direction in such a way that the ground layer and at least two of the stress control layers have respective edges lying, in an axial longitudinal section, on a Rogowski profile. Capacitor plates shaped according to certain Rogowski profiles are known to reduce the concentration of electrical field lines at the edges of those plates, thereby reducing the risk of electrical breakdown between their edges. Applying the same Rogowski principle to the location, in an axial longitudinal section, of edges of the ground layer of the cable and stress control layers of the stress control device used with the cable similarly reduces the concentration of electrical field lines at the edge of the ground layer and thereby reduces the risk of electrical breakdown between the central conductor and the edge of the ground layer of the cable. A Rogowski profile is thus made up of discrete end points of the edges of the cable ground layer and of stress control layers, in an axial longitudinal section of the cable and the stress control device.

In another aspect of the invention, the Rogowski profile is a Rogowski profile wherein electrical potential $\psi$ is equal to or greater than $0.1\pi$. Rogowski profiles for values of the electrical potential $\psi$ which are equal to or greater than $0.1\pi$ may provide particularly high reduction of the risk of electrical breakdown or may help in reducing the size of the stress control device. Rogowski Profiles wherein $\psi$ is less than $0.1\pi$ have a very flat shape and would extend very far in an axial direction of the cable. A stress control device in which the edges of a cable ground layer and the edges of stress control layers form a Rogowski Profile wherein $\psi$ is less than $0.1\pi$ may be too long for many practical purposes.

In another aspect of the invention, the Rogowski profile is a Rogowski profile wherein electrical potential $\psi$ is less than $(5/6)\pi$. Rogowski profiles for values of $\psi$ which are less than $(5/6)\pi$ may provide particularly high reduction of the risk of electrical breakdown.

In a further aspect of the invention, a non-conductive or semiconductive spacing layer is arranged between at least parts of two of the stress control layers. Such a spacing layer may allow for precise control of the distance between the stress control layers between which it is arranged. The edges of the stress control layers may thereby be positioned more precisely in a radial direction, which may lower the risk of electrical breakdown between the central conductor and the ground layer of a cable with which the stress control device is used. A spacing layer may, for example, comprise a silicone. The silicone may be based on a silicone rubber. The silicone may be loaded with carbon particles. A spacing layer may, for example, comprise ethylene propylene diene monomer (M-class) rubber. A spacing layer may, for example, comprise a material that has a specific resistance between $10^9$ $\Omega$ cm and $10^{16}$ $\Omega$ cm.

In a yet further aspect, the spacing layer comprises an extrudable polymeric material. The capability of a spacing layer to be extruded may permit manufacturing of the spacing layer and the entire stress control device at lower cost. The extrudable polymeric material may, for example, comprise a silicone. The silicone may be based on a silicone rubber. The silicone may be loaded with carbon particles. The extrudable polymeric material may, for example, comprise ethylene propylene diene monomer (M-class) rubber. The extrudable polymeric material may, for example, have a specific resistance between $10^9$ $\Omega$ cm and $10^{16}$ $\Omega$ cm.

In another aspect of the invention, one of the stress control layers is adapted to be put on ground potential. A grounded stress control layer may provide for a further reduced risk of electrical breakdown between a central conductor and a ground layer of a cable with which the stress control device is used, because a grounded stress control layer prevents concentration of the electrical field at the edge of the ground layer effectively. A stress control layer may, for example, be adapted to be put on ground potential by comprising an externally accessible section, over which a conductive tape can be wound. The other end of the tape may be in electrical contact with a grounded shielding braid of a termination device or of a joint, in which the stress control device may be comprised.

In another aspect of the invention, one of the stress control layers is adapted to be put on floating potential. Putting one of the stress control layers on floating potential may reduce the risk of electrical breakdown in parts of the cable that are not in direct vicinity of the edge of the ground layer. A stress control layer may, for example, be adapted to be put on floating potential by embedding it in electrically non-conductive material or by winding an electrically non-conductive film or tape around it.

The invention provides, in another aspect, a high-voltage termination device or high-voltage cable joint, which comprises an electrical stress control device as described above. A high-voltage termination device or cable joint, which comprises an electrical stress control device according to the invention, may exhibit a reduced risk of electrical breakdown between a central conductor and a ground layer of a cable with which the high-voltage termination device or cable joint is used, yet requiring little space.

In a further aspect of the invention, the high-voltage termination device or high-voltage cable joint, which comprises an electrical stress control device as described above, is, at least partially, elastic. Elasticity may allow the high-voltage termination device or high-voltage cable joint to conform closely around a cable inserted into the high-voltage termination device or high-voltage cable joint. An inner diameter of the termination device or cable joint and/or an outer diameter of the cable may be chosen such that the termination device or cable joint may form a seal with the cable, which may inhibit the penetration of water into or further into the termination device or joint.

The invention provides, in a further aspect, a method of installing a termination device or a cable joint on an end portion of a cable, the method comprising the steps of providing a termination device or a cable joint comprising an electrical stress control device as described above, providing an end portion of a cable comprising a central conductor and a ground layer, and the step of inserting the end portion of the cable into the bore of the stress control device in an axial direction in such a way that the stress control layers of the stress control device extend, in said axial direction, further towards the end of the cable than the ground layer of the cable, as viewed in an axial longitudinal section, and in such a way that a radially outer one of the stress control layers extends, in said axial direction, further towards the end of the cable than a radially inner one of the stress control layers.

The invention provides, in another aspect, a method of installing a termination device or a cable joint on an end portion of a cable, the method comprising the steps of providing a termination device or a cable joint comprising an electrical stress control device as described above, providing an end portion of a cable comprising a central conductor and a ground layer, and the step of inserting the end portion of the cable into the bore of the stress control device in an axial direction in such a way that the ground layer of the cable and at least two of the stress control layers of the stress control device have respective edges lying, in an axial longitudinal section, on a convex profile

In another aspect, the invention provides a method of installing a termination device or a cable joint on an end portion of a cable, the method comprising the steps of providing a termination device or a cable joint comprising an electrical stress control device as described above, providing an end portion of a cable comprising a central conductor and a ground layer, and the step of inserting the end portion of the cable into the bore of the stress control device in an axial direction in such a way that the ground layer of the cable and at least two of the stress control layers of the stress control device have respective edges lying, in an axial longitudinal section, on a Rogowski profile

The invention will now be described in more detail with reference to the following Figures exemplifying particular embodiments of the invention:

Fig. 1    Perspective axial longitudinal section of an end portion of a cable;

Fig. 2    Diagram of equal potential lines between and around capacitor plates;

Fig. 3    Axial longitudinal section of a cable termination comprising a stress control device according to the invention;

Fig. 4    Perspective axial longitudinal section of an end portion of a cable and a cable termination comprising a stress control device according to the invention; and

Fig. 5    More detailed perspective axial longitudinal section of an end portion of a cable and a cable termination comprising a stress control device according to the invention.

Herein below various embodiments of the present invention are described and shown in the drawings wherein like elements are provided with the same reference numbers.

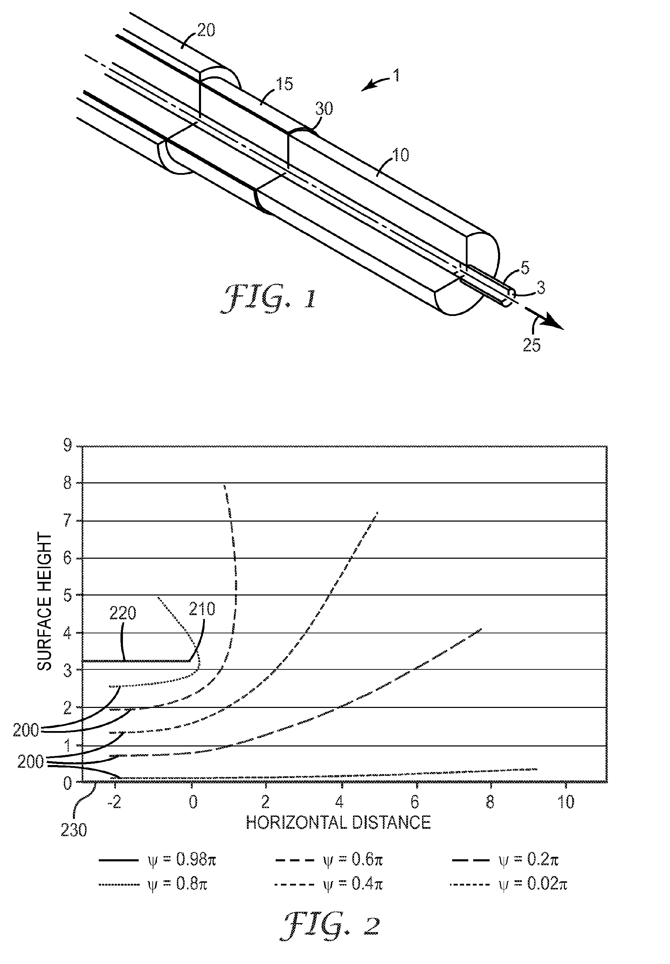

**Figure 1** shows an end portion of a typical high-voltage cable 1 in a perspective longitudinal-sectional view. Some radial dimensions are exaggerated for clarity of the Figure. The cable 1 comprises a high-voltage conductor 5 or central conductor 5, which conducts currents at a high voltage, located in the center of the cable 1. In this Figure, an end 3 of the cable 1 is located where the central conductor 5 ends. The end portion of the cable 1 is the part of the cable 1 which comprises the vicinity of an edge 30 of a ground layer 15 and the part of the cable 1 between the edge 30 of the ground layer 15 and the end 3 of the cable1. An insulation layer 10 is concentrically arranged around the central conductor 5. The semiconductive or conductive ground layer 15 is arranged concentrically around the insulation layer 10. This ground layer 15 is sometimes also called a shielding layer. The ground layer 15 is connected to ground potential at a location further away from the end 3 of the cable 1, this location is not shown in this Figure. The outermost layer of the cable 1 is the non-conductive cable jacket 20 or cable sheath 20.

The cable 1 has been prepared for being ready for termination or for a joint with a second cable (not shown). This preparation involves cutting back parts of the sheath 20, parts of the ground layer 15, and parts of the insulation layer 10, so that the central conductor 5 is exposed and can be fixed to a termination or a connector (not shown). The ground layer 15 has been partly removed so that it extends, in an axial direction of the cable, indicated by an arrow 25, up to an edge 30. The edge 30 of the ground layer 15 is located at a sufficient distance from the exposed central conductor 5, so that, when the cable is in operation, no risk of electrical breakdown or discharge between the ground layer 15 and the central conductor 5 exists. The cable sheath 20, in turn, has been removed up to a point sufficiently far from the edge 30 of the ground layer 15, so that the ground layer 15 can be electrically contacted close to the edge 30.

The ground layer 15 consists, in the embodiment shown, of a semiconductive material on the outer surface of the insulation layer 10. In this embodiment, the semiconductive material is a cross-linked polyethylene or XLPE, loaded with carbon-particulate matter. The ground layer 15 is co-extruded with the insulation layer 10 of the cable 1. Alternatively, the ground layer 15 could also comprise a metal foil. The metal foil could be wound around the insulation layer 10. The ground layer 15 could, for example, comprise an aluminium foil, e.g. a wound aluminium foil. In general, the ground layer 15 may be semiconductive or conductive.

**Figure 2** depicts equal potential lines 200 of an electrical field at an edge 210 of a first capacitor plate 220 as a function of horizontal distance and surface height from a second capacitor plate 230. The first capacitor plate 220 is a semi-infinite capacitor plate and the second capacitor plate 230 is an infinite capacitor plate. The first capacitor plate 220 and the second capacitor plate 230 combine to form a capacitor. The second capacitor plate 230 is located at surface height zero. The edge 210 of the first capacitor plate 220 is located at surface height 3.1, which is the distance between the capacitor plates 220, 230 and at horizontal distance zero. The distance between the capacitor plates 220, 230 serves as a scale for the x-axis and the y-axis of this diagram, which axes are therefore not labelled with any units of length. The capacitor plate 220 extends horizontally from horizontal distance $-\infty$ to zero. Rogowski profiles are the equal potential lines 200 near the edge 210 of the first capacitor plate 220. Each value of $\psi$ represents an equal potential line 200 and thus a Rogowski profile.

When designing real-life, i.e. finite, capacitor plates, some equal potential lines 200 of the Rogowski-type infinite/semi-infinite capacitor plate arrangement are known to represent advantageous shapes of real-life capacitor plates, so that the risk of electrical breakdown between the plates in the vicinity of the edge of a plate is reduced. It is known that a first capacitor plate shaped according to certain Rogowski profiles is advantageous in that the electrical field between the first plate and the second plate in the space adjacent to the edge of the first plate is not stronger than the field between the plates further away from the edge of the first plate, and in that concentration of the electrical field at the edge of the first capacitor plate is reduced, so that the risk of electrical breakdown between the plates in the area of the first plate's edge is minimized.

Rogowski profiles are often mathematically described by an implicit formula for the spatial coordinates (x; y) in a 2-dimensional plane:

$$x = A \left( \varphi + \exp(\varphi) \cos \psi \right)$$

$$y = A \left( \psi + \exp(\varphi) \sin \psi \right)$$

wherein
A = geometrical normalization parameter,
$\varphi$ = electrical field strength,
$\psi$ = electrical potential.

It is known that capacitor plates which have the shape of equal potential lines 200 according to certain Rogowski profiles provide for improved electrical breakdown resistance. The actual shape of the equal potential lines 200 and of the corresponding Rogowski profiles depends on the electrical potential $\psi$ chosen. The shape of equal potential lines 200 is different for each value of $\psi$, as can be seen in Figure 2. It is known that a capacitor plate which is shaped according to a Rogowski profile with $\psi = \pi/2$ provides for good electrical breakdown protection in the edge area of the plate. It is further known that a capacitor plate shaped according to a Rogowski profile with $\psi = (2/3)\pi$ still provides for good breakdown protection, while a capacitor plate shaped according to a Rogowski profile with $\psi \geq (5/6)\pi$ is generally considered to not provide acceptable breakdown protection any more.

The Rogowski principle for shaping capacitor plates may be applied to a stress control device which may determine the concentration of the electrical field between the central conductor 5 and the conductive ground layer 15 of a cable 1 inserted into the stress control device.

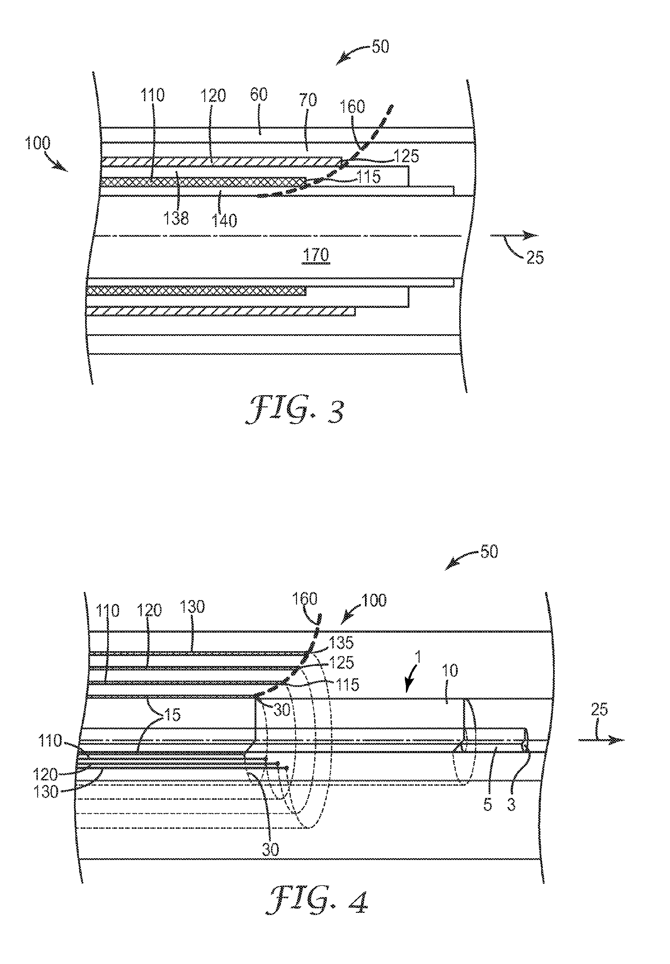

The edge 30 of the ground layer 15 of an end portion of a cable 1 can be positioned in the stress control device such that the edge 30 of the ground layer 15 and the edges of conductive stress control layers of the stress control device are located on a Rogowski profile, as viewed in an axial longitudinal section. This aspect of the invention is explained in more detail in the context of Figures 3 and 4.

For a given distance, in an axial longitudinal section of the cable 1 and the stress control device 100, between the central conductor 5 and the ground layer 15 the shape of an equal potential line 200 for a specific electrical potential $\psi$, i.e. of the Rogowski profile for a specific electrical potential $\psi$, can be derived in known ways from solving the known implicit formulae for x and y given above. W. Rogowski's original paper ("Die elektrische Festigkeit am Rande des Plattenkondensators", Archiv für Elektrotechnik, Vol. XII, 1923) sets out ways to compute suitable profiles for a given distance between capacitor plates.

Also other convex profiles, different from Rogowski profiles, may provide some reduction in the risk of electrical breakdown. Hence, according to another aspect of the invention, the edge 30 of the ground layer 15 of an end portion of a cable 1 can be positioned in the stress control device such that the edge 30 of the ground layer 15 and the edges of conductive stress control layers of the stress control device are located on a convex profile, as viewed in an axial longitudinal section.

**Figure 3** is a schematic axial longitudinal section of a cable termination 50 comprising a stress control device 100 according to the present invention. The outermost layer of the termination 50 is an insulating layer 60. The insulating layer 60 is arranged concentrically around a so-called High-K layer 70, which provides a certain degree of conductivity for control of the electric field between the insulating layer 60 and the high-voltage central conductor 5 of a high-voltage cable 1, with which the termination 50 may be used. The High-K layer 70 often comprises carbon particles which provide for a degree of electrical conductivity in that layer 70.

The stress control device 100 comprises, in the embodiment shown here, two conductive stress control layers 110, 120 and two insulating spacer layers 138, 140. The stress control layers 110, 120 and the spacer layers 138, 140 are arranged concentrically around an axial bore 170, into which the end portion of a cable 1 can be inserted, for example the end portion of the cable 1 shown in Figure 1. One or several or all of the spacer layers 138, 140 may alternatively be semi-conductive, e.g. Hi-K layers comprising carbon particles which provide for a degree of electrical conductivity in that layer.

The radially inner stress control layer 110 or inner stress control layer 110 is arranged concentrically around the axial bore 170. It extends, in an axial direction indicated by the arrow 25, up to an edge 115. The radially outer stress control layer 120 or outer stress control layer 120 is arranged concentrically around the axial bore 170 and concentrically around the inner stress control layer 110, so that the stress control layers 110, 120 are arranged concentrically with each other. The outer stress control layer 120 extends, in the axial direction indicated by the arrow 25, up to an edge 125. The outer stress control layer 120 extends further, in the axial direction indicated by the arrow 25, than the inner stress control layer 110.

The inner stress control layer 110 is separated from the bore 170 by an inner spacer layer 140, which is arranged concentrically around the bore 170 and extends axially beyond the edge 115 of the inner stress control layer 110. The outer stress control layer 120 is separated from the inner stress control layer 110 by another, outer spacer layer 138, which is arranged concentrically around the inner stress control layer 110, the inner spacer layer 140 and the bore 170. The outer spacer layer 138 extends axially beyond the edge 125 of the outer stress control layer 110. Both the inner spacer layer 140 and the outer spacer layer 138 have a degree of conductivity, their relative permittivity is between $\varepsilon_R = 10$ and $\varepsilon_R = 30$. Both stress control layers 110, 120 are electrically connected to ground potential through a respective conductive tape wound over an externally accessible section of each stress control layer 110, 120 individually and wound also over grounded shielding braid of the termination device 50, these externally accessible sections and the tapes are located further towards the left and are not shown in the Figure. One or more of the stress control layers 110, 120 might alternatively be electrically unconnected and thus be on a floating electrical potential.

The insulating layer 60, the High-K layer 70, the stress control layers 110, 120 and the spacer layers 138, 140 are elastic. By virtue of the layers being elastic, the entire cable termination 50 is elastic. When inserting a cable 1 into the bore 170, where the cable sheath 20 of the cable 1 has an outer diameter slightly larger than the inner diameter of the bore 170, the termination 50 slightly expands during insertion due to its elasticity, and after insertion conforms tightly around the cable sheath 20. This may prevent water from penetrating into the termination 50.

An end portion of a cable 1 can be inserted into the bore 170 in the axial direction of arrow 25 in a way that the stress control layers 110, 120 extend, in that axial direction of arrow 25, further towards the end 3 of the cable 1 than the ground layer 15.

The end portion of the cable 1 can be inserted into the bore 170 in that axial direction of arrow 25 in a way that the ground layer 15 of the cable 1 and the stress control layers 110, 120 extend up to respective edges 30, 115, 125 lying, in an axial longitudinal section of the cable 1 and the stress control device 100, on a convex profile 160. In the embodiment shown, the convex profile 160 is a Rogowski profile 160.

A profile is meant to be a smooth line in the half-plane of an axial longitudinal section of the cable 1 and the stress control device 100, the line passing through the edge 30 of the ground layer 15 and through the edges 115, 125 of the stress control layers 110, 120, wherein the edge of the half-plane is formed by the center line of the central conductor 5 of the cable 1. The axial longitudinal section comprises the center line of the central conductor 5.

Figure 4 is a perspective axial longitudinal section of an end portion of a high-voltage cable 1 and a cable termination 50 comprising a stress control device 100 according to the invention. The cut-away of the longitudinal section is in two planes. The cable 1 has a ground layer 15 which extends, in the axial direction indicated by arrow 25, to an edge 30. This stress control device 100 has three stress control layers 110, 120, 130, extending to respective edges 115, 125, 135. The ground layer 15 of the cable 1 is separated from the central conductor 5 of the cable 1 by the insulation layer 10. The edge 30 of the ground layer 15 and the edges 115, 125, 135 of the stress control layers 110, 120, 130 are located, in the axial longitudinal section as shown, on a convex profile 160, specifically on a Rogowski profile 160. This Rogowski profile 160 has a value of $\psi$ of approximately $0.4\,\pi$. The Figure shows the cable 1 inserted into the bore 170 of the stress control device 100 in the axial direction 25 in such a way that the stress control layers 110, 120, 130 extend, in the axial direction 25, further towards the end 3 of the cable 1 than the ground layer 15. As can also be seen in the Figure, the stress control layer 120, extends, in the axial direction 25, further towards the end 3 of the cable than the stress control layer 110. With respect to each other, the stress control layer 120 is a radially outer stress control layer and the stress control layer 110 is a radially inner stress control layer, because the stress control layer 110 is located at a smaller radius from the center line of the axial bore 170 than the stress control layer 120. Thus, in this embodiment, a radially outer one of the stress control layers 110, 120, 130 extends, in said axial direction 25, further towards the end 3 of the cable 1 than a radially inner one of the stress control layers 110, 120, 130. Similarly, the stress control layer 120 is a radially inner stress control layer with respect to the stress control layer 130, and stress control layer 130 is a radially outer stress control layer with respect to the stress control layer 120 and with respect to stress control layer 110.

The embodiment of a stress control device 100 according to the invention shown in Fig. 4 has three stress control layers 110, 120, 130, the edges 115, 125, 135 of which lie on a convex profile 160. It may therefore provide a better reduction of the risk of electrical breakdown than the embodiment shown in Figure 3, which has only two stress control layers 110, 120.

It is contemplated that the stress control device 100 might alternatively have four, five, six or more stress control layers 110, 120, 130. Some or all of those layers 110, 120, 130 may be arranged such that the end portion of the cable 1 can be inserted into the bore 170 in an axial direction 25 in such a way that all of the stress control layers 110, 120, 130 of the stress control device extend, in said axial direction 25, further towards the end 3 of the cable 1 than the ground layer 15 of the cable 1, as viewed in an axial longitudinal section of the cable 1 and the stress control device, and in that a radially outer one of the stress control layers 110, 120, 130 extends, in said axial direction 25, further towards the end 3 of the cable 1 than a radially inner one of the stress control layers 110, 120, 130. A greater number of stress control layers 110, 120, 130, arranged as described here, may provide a greater reduction of the risk of electrical breakdown than the embodiment shown in Figure 3, which has only two stress control layers 110, 120. Similarly, a greater number of stress control layers 110, 120, 130, arranged in such a way that the ground layer 15 of the cable 1 and all of the stress control layers 110, 120, 130 extend up to respective edges 30, 115, 125, 135 lying, in an axial longitudinal section, on a convex profile 160, may provide a greater reduction of the risk of electrical breakdown

---

than the embodiment shown in Figure 3, which has only two stress control layers 110, 120. The reduction in risk of breakdown may even be greater if all of the stress control layers 110, 120, 130, are arranged in such a way that the ground layer 15 of the cable 1 and all of the stress control layers 110, 120, 130 extend up to respective edges 30, 115, 125, 135 lying, in an axial longitudinal section, on a Rogowski profile 160.

In Figure 4, the stress control device 100 is shown to be comprised in a cable termination 50. The stress control device 100 may alternatively be comprised in other devices that may be used with an end portion of a cable 1, like, for example, cable joints or bushings.

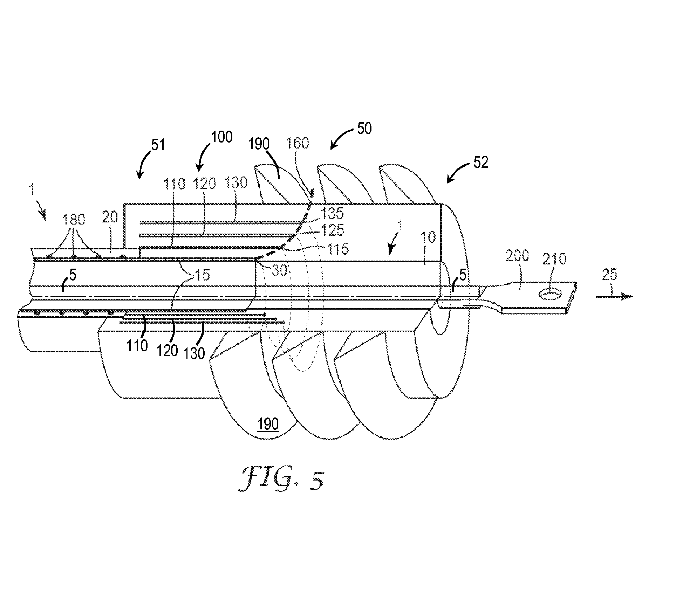

**Figure 5** is a perspective longitudinal section of a cable termination 50 of Figure 4 showing additional details. Note that some dimensions are exaggerated for clarity. Between the ground layer 15 and the cable sheath 20, the cable 1 has a mesh of shielding wires 180, wound around the ground layer 15 and in electrical contact with the ground layer 15. The shielding wires 180 are not shown in Figure 4. In preparation of the termination of the cable 1, the shielding wires 180 are removed and pulled back from the end portion of the cable 1 entering a cable end portion 51 of the termination 50, so that only a small part of the cable 1 inside the termination 50 is covered by shielding wires 180. The cable sheath 20 extends a small distance into the termination 50, so that a water tight seal can be obtained between the cable end portion 51 of the termination 50 and the cable sheath 20. The cable termination 50 is made of an elastic material. The diameter of the bore 170 is chosen small enough so that the cable end portion 51 of the termination 50 conforms around the cable sheath 20 of the cable and forms a water tight seal with the cable sheath 20.

The cable termination 50 also comprises a plurality of circular wings 190, having an essentially triangular profile. Their purpose is to minimize surface leakage current from a connector end portion 52 to the cable end portion 51 of the cable termination 50.

The Figure also shows a cable lug 200 attached to the central conductor 5 of the cable 1. The lug 200 comprises a hole 210 for attachment to an electrical installation (not shown). An additional elastic tube (not shown) is normally positioned over the connector end 52 of the termination 50 and a part of the lug 200 close to the termination 50, to mechanically protect the connection of these two elements and to prevent the entry of water into the termination 50.

**Claims**

1. Electrical stress control device for use with an end portion of a cable (1) having a central conductor (5) and a ground layer (15), the stress control device comprising an axial bore (170) into which the end portion of the cable (1) can be inserted, and two or more conductive or semiconductive stress control layers (110, 120, 130), at least parts of which are arranged concentrically around the bore (170) and concentrically with each other, **characterized in that** the end portion of the cable (1) can be inserted into the bore (170) in an axial direction (25) in such a way that at least two of the stress control layers (110, 120, 130) of the stress control device extend, in said axial direction (25), further towards the end (3) of the cable (1) than the ground layer (15) of the cable (1), as viewed in an axial longitudinal section of the cable (1) and the stress control device, and **in that** a radially outer one of the stress control layers (110, 120, 130) extends, in said axial direction (25), further towards the end (3) of the cable (1) than a radially inner one of the stress control layers (110, 120, 130).

2. Electrical stress control device according to claim 1, wherein the cable (1) can be inserted into the bore (170) in an axial direction (25) in such a way that the ground layer (15) of the cable (1) and at least two of the stress control layers (110, 120, 130) of the stress control device have respective edges (30, 115, 125, 135) lying, in an axial longitudinal section, on a convex profile (160).

3. Electrical stress control device according to claim 1 or claim 2, wherein the cable (1) can be inserted into the bore (170) in an axial direction (25) in such a way that the ground layer (15) and at least two of the stress control layers (110, 120, 130) have respective edges (30, 115, 125, 135) lying, in an axial longitudinal section, on a Rogowski profile (160).

4. Electrical stress control device according to claim 3, wherein the Rogowski profile (160) is a Rogowski profile wherein electrical potential $\psi$ is equal to or greater than $0.1\pi$.

5. Electrical stress control device according to claim 3 or claim 4, wherein the Rogowski profile (160) is a Rogowski profile wherein electrical potential $\psi$ is less than $(5/6)\pi$.

6. Electrical stress control device according to any one of the preceding claims, wherein a non-conductive or semiconductive spacing layer (138, 140) is arranged between at least parts of two of the stress control layers (110, 120, 130).

7. Electrical stress control device according to claim 6, wherein the spacing layer (138, 140) comprises an extrudable polymeric material.

8. Electrical stress control device according to any one of the preceding claims, wherein one of the stress control layers (110, 120, 130) is adapted to be put on ground potential.

9.  Electrical stress control device according to any one of the preceding claims, wherein one of the stress control layers (110, 120, 130) is adapted to be put on floating potential.

10. High-voltage termination device (50) or high-voltage cable joint (50), comprising an electrical stress control device according to any one of the preceding claims.

11. High-voltage termination device (50) or high-voltage cable joint (50) according to claim 10, wherein the high-voltage termination device (50) or high-voltage cable joint (50) is, at least partially, elastic.

12. Method of installing a termination device (50) or a cable joint (50) on an end portion of a cable (1), the method comprising the steps of

    a) providing a termination device (50) or a cable joint (50) comprising an electrical stress control device according to any one of claims 1 through 9,
    b) providing an end portion of a cable (1) comprising a central conductor (5) and a ground layer (15),
    c) inserting the end portion of the cable (1) into the bore (170) of the stress control device in an axial direction (25) in such a way that the stress control layers (110, 120, 130) of the stress control device extend, in said axial direction (25), further towards the end (3) of the cable (1) than the ground layer (15) of the cable (1), as viewed in an axial longitudinal section, and in that

    a radially outer one of the stress control layers (110, 120, 130) extends, in said axial direction (25), further towards the end (3) of the cable (1) than a radially inner one of the stress control layers (110, 120, 130).

*FIG. 1*

*FIG. 2*

FIG. 3

FIG. 4

*FIG. 5*

Europäisches
Patentamt
European
Patent Office
Office européen
des brevets

# EUROPEAN SEARCH REPORT

**Application Number**

EP 10 19 5572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 1 563 946 A (ATKINSON RALPH W) 1 December 1925 (1925-12-01) * page 2, line 20 - page 2, line 37; figures 1,2 * | 1,6,8, 10,12 | INV. H02G15/072 |
| X | US 3 005 868 A (LINDERHOLM SVEN O) 24 October 1961 (1961-10-24) * column 5, line 55 - column 5, line 74; figure 6 * | 1,6,8, 10,12 | |
| A | EP 0 028 201 A1 (SIEMENS AG [DE]) 6 May 1981 (1981-05-06) * the whole document * | 1-12 | |
| A | US 2 651 670 A (BOSWORTH PHILLIPS N) 8 September 1953 (1953-09-08) * column 4, line 20 - column 5, line 20; figure 3 * | 1-12 | |
| | | | **TECHNICAL FIELDS SEARCHED (IPC)** H02G |

The present search report has been drawn up for all claims

| Place of search | Date of completion of the search | Examiner |
|---|---|---|
| The Hague | 18 May 2011 | Bolder, Arthur |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 10 19 5572

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2011

| Patent document cited in search report | | Publication date | Patent family member(s) | | Publication date |
|---|---|---|---|---|---|
| US 1563946 | A | 01-12-1925 | NONE | | |
| US 3005868 | A | 24-10-1961 | NONE | | |
| EP 0028201 | A1 | 06-05-1981 | DE | 2944121 A1 | 14-05-1981 |
| | | | JP | 1039295 B | 21-08-1989 |
| | | | JP | 56073822 A | 18-06-1981 |
| | | | US | 4403109 A | 06-09-1983 |
| US 2651670 | A | 08-09-1953 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0074191 A
- EP 1056162 A